# EUROPÄISCHE PATENTSCHRIFT

(11) **EP 0 646 619 B1**
(45) Veröffentlichungstag und Bekanntmachung des Hinweises auf die Patenterteilung: **07.04.1999**
(21) Anmeldenummer: 94111740.0
(22) Anmeldetag: 28.07.1994
(51) Int. Cl.: C08J 9/18, B29C 44/34

(54) **Verfahren zur Herstellung von Schaumperlen**
Process for producing foam particles
Procédé de préparation de billes expansées

(30) Priorität: 25.09.1993 DE 4332724
(43) Veröffentlichungstag der Anmeldung: 05.04.1995
(73) Patentinhaber: Gefinex Polymerschäume GmbH, 33803 Steinhagen (DE)
(72) Erfinder: Träger, Michael, Dr., D-45721 Haltern (DE); Wirobski, Reinhard, D-45768 Marl (DE); Leven, Thomas, Dr., D-58511 Lüdenscheid (DE)

(56) Entgegenhaltungen:
- EP-A- 0 195 118
- EP-A- 0 530 486
- EP-A- 0 550 862

## Beschreibung

Gegenstand der vorliegenden Erfindung ist ein Verfahren zur Herstellung von Schaumperlen aus Polyolefinen, die eine grobe Zellstruktur und eine enge Zellgrößenverteilung aufweisen.

Zur Herstellung von Polyolefin-Schaumperlen mittels Dispersionsschäumung ist eine Reihe von Verfahren bekannt. Beispielsweise wird in der DE-A-21 55 775 eine Dispersion aus Polymerteilchen in einem flüssigen Dispersionsmittel unter Druck wärmebehandelt und unter anschließender Entspannung verschäumt. Die Verschäumung wird dadurch erklärt, daß das Dispersionsmittel Hohlräume des Polymeren infiltriert und beim Ausspritzen in einen Niederdruckraum als Treibmittel wirkt. Zur Erleichterung der Infiltration soll das Polymere 10 bis 70 Gew.-% eines Füllstoffs enthalten. Nach dieser Methode werden Vorschaumperlen mit feiner und gleichmäßiger Zellstruktur erhalten. Wie die Beispiele zeigen, ist jedoch die Expansionsrate ungleichmäßig. In der Praxis hat sich erwiesen, daß eine Verarbeitung dieser Vorschaumperlen Zu geschäumten Formkörpern wegen des hohen Füllstoffanteils und des niedrigen Zellendurchmessers schwierig ist.

Die Verschäumung speziell von Ethylen/Propylen-Randomcopolymeren wird in der EP-A-0 053 333 beschrieben. Dort wird mit einem System gearbeitet, das aus Polymerpartikeln, Wasser als Dispersionsmittel, einem festen Dispergierhilfsmittel sowie einem flüchtigen Treibmittel besteht.

Aus der EP-A-0 071 981 ist bekannt, daß sich Polypropylen-Schaumperlen dann Zu dimensionsstabilen Formteilen verschweißen lassen, wenn die Größe der gasgefüllten Zellen innerhalb des Schaumes so eingestellt wird, daß in der Schnittfläche pro mm² nicht mehr als 300 Zellen enthalten sind, wobei das Formteil eine Dichte von 0,026 bis 0,060 g/cm³ aufweist und eine latente Kristallisationswärme von 9 bis 28 cal/g besitzt. Diese Schrift gibt aber keine Anweisung, welche technischen Maßnahmen nötig sind, um diese Zelligkeit zu erhalten.

Die EP-A-0 095 109 lehrt darüber hinaus, daß zur Erzielung einer gleichmäßigen Zellstruktur und einer gleichbleibenden Expansionsrate während des Ausspritzvorgangs nicht nur die Innentemperatur so genau wie möglich konstantgehalten werden muß, sondern daß auch der Innendruck und der Partialdruck des Treibmittels auf konstantem Niveau bleiben müssen.

Allerdings wird durch die Nachführung kalter Inertgase oder kalten Treibmittels, das je nach Beschaffenheit durch Wärmeaufnahme im Reaktor verdampfen muß, der Reaktorinhalt unerwünschterweise abgekühlt. Diese Abkühlung wird gemäß der EP-A-0 290 943 dadurch vermieden, daß durch Zufuhr einer Heizflüssigkeit das Flüssigkeitsniveau im Reaktor und damit Druck und Temperatur gleich bleiben. Da erhebliche Mengen an Heizflüssigkeit zugeführt werden müssen, ist dieses Verfahren jedoch mit einem beträchtlichen Energieaufwand verbunden.

Gemäß dem Stand der Technik müssen also erhebliche Anstrengungen unternommen werden, um während des Ausfahrvorgangs die Temperatur des Reaktorinhalts konstant zu halten, um so eine gleichmäßige Zellstruktur der Schaumperlen zu erzielen.

Für die Verarbeitung der Schaumperlen ist es darüber hinaus erwünscht, daß diese - neben einer gleichmäßigen Zellstruktur und verhältnismäßig hohem Zellendurchmesser - annähernd Kugelgestalt aufweisen, damit sie eine Form möglichst gut füllen. Dies kann dadurch erreicht werden, daß die Polymerteilchen im Reaktor einer Wärmebehandlung oberhalb ihres Kristallitschmelzpunkts Tₘ unterworfen werden. Neben der Rundung der Partikel zur Kugelform ergibt sich als weiterer Effekt dieses Verfahrens, daß hierbei nur eine vergleichsweise geringe Treibmittelmenge benötigt wird. Die erhaltenen Schaumperlen sind jedoch sehr feinzellig und lassen sich daher nur schlecht verarbeiten.

Führt man hingegen die Wärmebehandlung im Temperaturbereich unterhalb von Tₘ durch, so haben die geschäumten Partikel die Gestalt des eingesetzten Granulats, d. h. sie sind in der Regel mehr oder weniger zylinderförmig, was die Oberflächenstruktur der daraus gefertigten Formteile ungünstig beeinflußt.

Auch durch eine Kombination beider Verfahrensweisen kann man die oben beschriebenen Nachteile nicht umgehen. Wenn die Wärmebehandlung z. B. bei Temperaturen oberhalb von Tₘ durchgeführt und anschließend vor der Expansion der Polymerpartikel im Reaktor auf eine Temperatur unterhalb von Tₘ abgekühlt wird, so erhält man unerwünscht feinzellige Schaumperlen, die bei der Verarbeitung zu Formteilen sehr stark schrumpfen.

In der EP-A-0 195 118 wird ein Verfahren zur Herstellung von Schaumpartikeln beschrieben, bei dem Polypropylenpartikel in einem Dispersionsmittel auf eine Temperatur von Tₘ oder höher erhitzt werden und dann in ein Medium mit einer Temperatur von Tₘ -30°C oder niedriger entlassen werden, wobei die Polymerpartikel abgeschreckt werden. Die so behandelten Partikel werden dann erneut in einem Dispersionsmittel dispergiert und auf bekannte Weise wärmebehandelt und verschäumt. Es werden grobzellige Schaumpartikel erhalten, das Verfahren ist aber aufwendig.

Es stellte sich daher die Aufgabe, ein einfaches Verfahren zur Herstellung von annähernd kugelförmigen Schaumpartikeln mit grober Zellstruktur und enger Zellgrößenverteilung zu entwickeln. Darüber hinaus sollte die Möglichkeit bestehen, die Expansionsrate und die Zellgröße gezielt einzustellen.

Überraschend erwies es sich, daß diese Aufgabe gelöst wird, wenn der Reaktorinhalt, der im wesentlichen aus Polyolefinteilchen, einem flüssigen Dispersionsmittel und ggf. einem flüchtigen Treibmittel besteht, zunächst bei einer ersten Temperatur behandelt wird, die oberhalb des Kristallitschmelzpunkts Tₘ des Polyolefins liegt, und anschließend durch eine Abkühlvorrichtung geleitet wird, in der die Dispersion auf eine niedrigere zweite Temperatur gebracht wird, welche oberhalb des Erweichungspunktes des Polyolefins liegt, wonach die Polymerpartikel dann bei dieser Temperatur verschäumt werden.

Die dem Abkühlen der ausströmenden Dispersion dienende Vorrichtung kann jede denkbare Vorrichtung sein, die diesen Zweck erfüllt. In einer bevorzugten Ausführungsform dient hierzu ein Wärmeaustauscher. Eine weitere bevorzugte Ausführungsform besteht darin, daß in die ausströmende Dispersion kaltes Dispersionsmittel oder eine sonstige kalte inerte, flüssige oder gasförmige Substanz, wie z. B. ein kalter Stickstoffstrom, eindosiert wird. Um auf eine definierte Expansionstemperatur zu kommen, muß der zudosierte Kälteträger in Menge und Temperatur an den Durchfluß und die Temperatur der ausströmenden Dispersion angepaßt werden.

Im folgenden soll die Erfindung näher erläutert werden.

Als Polyolefine sind beispielsweise Propylenpolymere wie Propylen-Ethylen- oder Propylen-Butylen-Randomcopolymere, Random-Terpolymere von Ethylen, Propylen und Buten-1, Ethylen-Propylen-Blockcopolymere und Homopolypropylen, Ethylenpolymere wie Polyethylen niedriger, mittlerer oder hoher Dichte, lineares Polyethylen niedriger Dichte, Ethylen-Vinylacetat-Copolymere, Ethylen-Methylmethacrylat-Copolymere, Ionomere oder andere Polyolefine wie Polybuten-1 geeignet. Bevorzugt wird ein Ethylen-Propylen-Randomcopolymeres mit 1 bis 15 Gew.-% Ethylen eingesetzt.

Diese Polymeren liegen als diskrete Partikel vor. Sie haben vorzugsweise einen mittleren Teilchendurchmesser von 0,5 bis 5 mm. Um eine gleichmäßige Schäumung zu erzielen, können sie gegebenenfalls, dem Stand der Technik entsprechend, einen Füllstoff enthalten, der als Keimbildner wirkt.

Als Dispersionsmittel wird vorzugsweise Wasser verwendet. Geeignet sind jedoch beispielsweise auch Alkohole wie Methanol oder Ethanol.

Um ein Agglomerieren zu verhindern, kann der Mischung von Polymerteilchen und Dispersionsmittel ein feinteiliges Dispergierhilfsmittel und/oder eine oberflächenaktive Verbindung zugesetzt werden. Beispiele hierfür sind Calciumphosphat, basisches Magnesiumcarbonat, basisches Zinkcarbonat, Calciumcarbonat, Aluminiumoxid, Bariumsulfat, Talkum, Alkylbenzolsulfonate, Paraffinsulfonate oder Ethoxylate.

Zur Einstellung der Dichte der Schaumperlen ist es zweckmäßig, zusätzlich ein flüchtiges Treibmittel zuzugeben. Geeignete Treibmittel sind aus dem Stand der Technik bekannt; beispielsweise können gesättigte aliphatische Kohlenwasserstoffe wie Ethan, Propan, n-Butan, i-Butan, Pentan oder Hexan, alicyclische Kohlenwasserstoffe wie Cyclopentan oder Cyclohexan, halogenierte Kohlenwasserstoffe wie Trichlormonofluormethan, Dichlordifluormethan, Dichlortetrafluorethan, Trichlortrifluorethan, Dichlormonofluormethan, Methylchlorid, Methylenchlorid oder Ethylchlorid sowie anorganische Gase wie beispielsweise Kohlendioxid oder Stickstoff, jeweils einzeln oder als Mischung, verwendet werden.

Wird kein flüchtiges Treibmittel zugegeben, so wirkt bereits alleine das Dispersionsmittel als Treibmittel. Auf diese Weise werden zwar nur mäßige bis mittlere Expansionsraten erzielt, was aber für viele Anwendungszwekke, z. B. wo ein etwas steiferer Schaum verlangt wird, durchaus erwünscht ist.

In einer bevorzugten Ausführungsform liegt die erste Temperatur im Bereich zwischen Tₘ + 1 °C und Tₘ + 20 °C.

Im Rahmen dieser Erfindung wird der Kristallitschmelzpunkt Tₘ anhand einer DSC-Messung bestimmt. Hierbei wird eine Probe des Polyolefins mit einer Geschwindigkeit von 10 °C/min auf 250 °C aufgeheizt, dann mit einer Geschwindigkeit von 10 °C/min auf 50 °C abgekühlt und anschließend wieder mit einer Geschwindigkeit von 10 °C/min aufgeheizt. Das Maximum des hierbei auftretenden Peaks gibt Tₘ an.

Die Dauer der Wärmebehandlung ist Stand der Technik. Üblicherweise liegt die Haltezeit im Bereich zwischen 5 Minuten und 2 Stunden; vorzugsweise beträgt sie 15 bis 60 Minuten.

Die niedrigere zweite Temperatur liegt oberhalb des Erweichungspunktes des verwendeten Polyolefins, wie er gemäß ASTM D 648 mit einer Last von 4,6 kg/mm² bestimmt wird. Sie liegt bevorzugt 5 bis 25 °C unterhalb der ersten Temperatur.

Zur Abkühlung des ausströmenden Reaktorinhalts auf die zweite Temperatur kann prinzipiell jede Vorrichtung eingesetzt werden, die diesen Zweck erfüllt. Beispielsweise kann prinzipiell jeder Wärmeaustauscher des Standes der Technik eingesetzt werden. Die alleinige Voraussetzung ist, daß er so ausgelegt ist, daß der gewünschte Wärmeaustausch vollzogen werden kann. Zweckmäßigerweise sollte der Strömungsweg nicht unnötig umgelenkt werden. Die freie Querschnittsfläche einzelner Elemente muß auf die Partikelgröße abgestimmt sein. Üblicherweise beträgt die Verweilzeit der Dispersion im Wärmeaustauscher 1 bis 100 Sekunden, besonders bevorzugt 5 bis 20 Sekunden.

Eine genaue Einstellung der gewünschten Zellgröße gelingt bei diesem Verfahren dadurch, daß man der durchströmten Abkühlvorrichtung eine vorzugsweise wärmeisolierte Rohrstrecke nachschaltet. Dadurch wird die Verweilzeit der expandierfähigen Partikel bei Schäumtemperatur verlängert. Die Rohrstrecke sollte so dimensioniert sein, daß die Dispersion darin eine Verweilzeit von vorzugsweise 1 bis 100 Sekunden, besonders bevorzugt von 5 bis 20 Sekunden erhält.

Der Durchmesser der Entspannungsdüse sollte derart an den Partikeldurchmesser angepaßt sein, daß möglichst immer nur ein Partikel gleichzeitig durchgelassen wird, da sonst die Gefahr besteht, daß Partikel während des Schäumvorgangs miteinander agglomerieren. Ansonsten kann jede Düsengeometrie des Standes der Technik verwendet werden.

Die geschäumten Polymerpartikel werden anschließend auf übliche Weise abgetrennt und getrocknet. Im allgemeinen werden so Schaumdichten von 15 bis 100 g/l erhalten.

Die geschäumten Polymerpartikel können mit bekannten Methoden zu Formteilen verarbeitet werden. In den dafür verwendeten Maschinen wird der Polymerschaum unter Druck mit Hilfe von Wasserdampf von z. B. 1 bis 5 bar aufgeweicht bzw. angeschmolzen, wobei die einzelnen Schaumpartikel zu einem Formteil verschweißen.

In den folgenden Beispielen wird die Erfindung näher erläutert.

### Vergleichsbeispiel 1:

In einem 40 1-Reaktor wurde eine Suspension, bestehend aus:
100 Teilen Wasser,
20 Teilen eines Ethylen-Propylen-Randomcopolymerisats mit Tₘ = 143 °C,
3,5 Teilen Pentan/Hexan (6:1)
0,3 Teilen Tricalciumphosphat und
0,01 Teilen MARLON® A 360
unter Rühren auf 136 °C erhitzt und 30 Minuten bei 136 °C gerührt. Nach Ablauf dieser Haltezeit wurde der Reaktordruck mit Stickstoff auf 28 bar erhöht und der Inhalt über eine Düse in einen Niederdruckraum ausgetragen, wobei die Polymerpartikel aufschäumten.

Die geschäumten Partikel wurden isoliert und getrocknet. Zur Bestimmung der Zelligkeit wurden rasterelektronenmikroskopische Aufnahmen (REM) von Schnittflächen ausgewertet. Das Verarbeitungsverhalten wurde mit einem Formteilautomaten überprüft, wobei die Befüllung nach dem Kompressionsverfahren erfolgte. Beurteilt wurden die Verschweißbarkeit der Schaumpartikel, der Energiebedarf sowie die Schrumpfung der Formteile. Die Ergebnisse sind in der Tabelle 1 wiedergegeben.

### Vergleichsbeispiel 2:

Der gleiche Ansatz wie im Vergleichsbeispiel 1 mit der Ausnahme, daß die Treibmittelmenge auf 1,5 Teile reduziert wurde, wurde unter Rühren auf 157 °C erhitzt und 30 Minuten bei 157 °C gerührt. Anschließend wurde unter weiterem Rühren auf 136 °C abgekühlt. Nach Erreichen dieser Temperatur wurde der Reaktordruck mit Stickstoff auf 28 bar erhöht und der Inhalt über eine Düse in einen Niederdruckraum ausgetragen. Das weitere Vorgehen erfolgte wie im Vergleichsbeispiel 1; die Ergebnisse sind in der Tabelle 1 wiedergegeben.

### Beispiel 1:

Der gleiche Ansatz wie im Vergleichsbeispiel 1 mit der Ausnahme, daß die Treibmittelmenge auf 0,7 Teile reduziert wurde, wurde unter Rühren auf 157 °C erhitzt und 30 Minuten bei 157 °C gerührt. Nach Ablauf dieser Haltezeit wurde der Reaktordruck mit Stickstoff auf 28 bar erhöht und der Inhalt durch einen temperierten Wärmeaustauscher über eine Düse in einen Niederdruckraum ausgetragen. Der Wärmeaustauscher wurde so temperiert, daß die Suspensionstemperatur am Austritt des Wärmeaustauschers 136 °C (Schäumtemperatur) betrug. Hierbei wurde ein Rohrbündel-Wärmeaustauscher eingesetzt, der in senkrechter Aufstellung von unten angeströmt wurde. Die Verweilzeit der Dispersion im Wärmeaustauscher betrug ca. 10 Sekunden.

Das weitere Vorgehen erfolgte wie im Vergleichsbeispiel 1; die Ergebnisse sind in der Tabelle 1 wiedergegeben.

### Beispiel 2:

Es wurde wie im Beispiel 1 vorgegangen, mit der Ausnahme, daß die Treibmittelmenge auf 0,9 Teile geändert wurde; zusätzlich wurde die Suspension durch eine wärmeisolierte Rohrstrecke geleitet, die zwischen Wärmeaustauscher und Düse angeordnet war (Verweilzeit ca. 10 Sekunden). Die Suspensionstemperatur am Rohrende betrug 136 °C. Die Ergebnisse sind in der Tabelle 1 wiedergegeben.

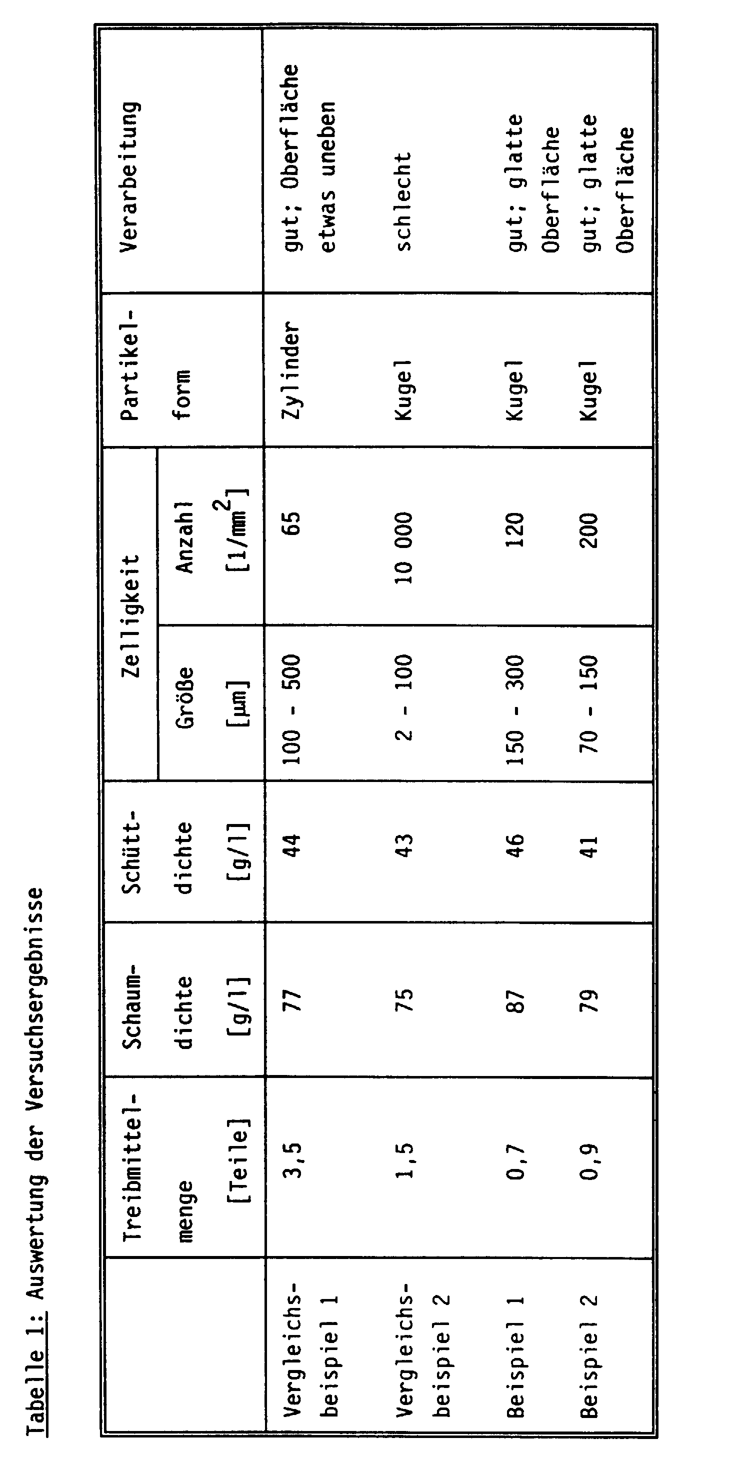

Die Versuchsergebnisse zeigen, daß eine schnelle und große Temperaturänderung, die dem Polypropylen aufgeprägt wird, deutlichen Einfluß auf die Zellgröße und Zellgrößenverteilung hat. In einer nachgeschalteten wärmeisolierten Rohrstrecke kann darüber hinaus die Zellgröße beeinflußt werden.

Entsprechende Ergebnisse werden auch bei Verwendung höherer Treibmittelmengen unter Herstellung niedriger Schaumdichten, beispielsweise 20 g/l, oder bei Verwendung anderer Treibmittel erhalten.

Die Versuche zeigen auch, daß im Gegensatz zum Stand der Technik keine Notwendigkeit besteht, während des Ausfahrvorgangs die Innentemperatur des Reaktors konstant zu halten, um eine gleichmäßige Expansionsrate zu gewährleisten. So kann ein Abfall der Innentemperatur durch entsprechende Regelung der durchströmten Abkühlvorrichtung kompensiert werden, was ein zusätzlicher Vorteil des erfindungsgemäßen Verfahrens ist.

## Patentansprüche

1. Verfahren zur Herstellung von Polyolefin-Schaumpartikeln mittels Dispersionsschäumng,
dadurch gekennzeichnet,
daß der Reaktorinhalt, der im wesentlichen aus Polyolefinteilchen, einem flüssigen Dispersionsmittel und ggf. einem flüchtigen Treibmittel besteht, zunächst bei einer ersten Temperatur behandelt wird, die oberhalb des Kristallitschmelzpunkts Tₘ des Polyolefins liegt, und anschließend durch eine Abkühlvorrichtung geleitet wird, in der die Dispersion auf eine niedrigere zweite Temperatur gebracht wird, welche oberhalb des Erweichungspunktes des Polyolefins liegt, wonach die Polymerpartikel dann bei dieser Temperatur verschäumt werden.

2. Verfahren gemäß Anspruch 1,
dadurch gekennzeichnet,
daß die erste Temperatur im Bereich zwischen Tₘ + 1 °C und Tₘ + 20 °C liegt.

3. Verfahren gemäß einem der vorhergehenden Ansprüche,
dadurch gekennzeichnet,
daß die niedrigere zweite Temperatur um 5 bis 25 °C unterhalb der ersten Temperatur liegt.

4. Verfahren gemäß einem der vorhergehenden Ansprüche,
dadurch gekennzeichnet,
daß die vom Reaktorinhalt durchströmte Abkühlvorrichtung ein Wärmeaustauscher ist.

5. Verfahren gemäß Anspruch 4,
dadurch gekennzeichnet,
daß die Verweilzeit der Dispersion im Wärmeaustauscher 1 bis 100 Sekunden und bevorzugt 5 bis 20 Sekunden beträgt.

6. Verfahren gemäß einem der Ansprüche 1 bis 3,
dadurch gekennzeichnet,
daß die vom Reaktorinhalt durchströmte Abkühlvorrichtung darin besteht, daß in die ausströmende Dispersion kaltes Dispersionsmittel oder eine sonstige kalte, inerte Substanz eindosiert wird.

7. Verfahren gemäß einem der vorhergehenden Ansprüche,
dadurch gekennzeichnet,
daß der vom Reaktorinhalt durchströmten Abkühlvorrichtung eine vorzugsweise wärmeisolierte Rohrstrecke nachgeschaltet ist.

8. Verfahren gemäß Anspruch 7,
dadurch gekennzeichnet,
daß die Verweilzeit der Dispersion in der nachgeschalteten Rohrstrecke 1 bis 100 Sekunden und vorzugsweise 5 bis 20 Sekunden beträgt.

9. Verfahren gemäß einem der vorhergehenden Ansprüche,
dadurch gekennzeichnet,
daß die Polyolefinteilchen aus einem Ethylen-Propylen-Randomcopolymeren mit 1 bis 15 Gew.-% Ethylen bestehen.

## Claims

1. A process for the production of polyolefin foam particles by dispersion foaming, characterized in that the reactor contents, which essentially comprise polyolefin particles, a liquid dispersion medium and, if desired, a volatile blowing agent, are first treated at a first temperature above the crystallite melting point Tₘ of the polyolefin, and subsequently passed through a cooling system, in which the dispersion is brought to a second, lower temperature which lies above the softening point of the polyolefin, and the polymer particles are then foamed at this temperature.

2. A process according to claim 1, characterized in that the first temperature is in the range of from Tₘ + 1°C to Tₘ + 20°C.

3. A process according to either one of the preceding claims, characterized in that the second, lower temperature is from 5 to 25°C below the first temperature.

4. A process according to any one of the preceding claims, characterized in that the cooling system through which the reactor contents flow is a heat exchanger.

5. A process according to claim 4, characterized in that the residence time of the dispersion in the heat exchanger is from 1 to 100 seconds, preferably from 5 to 20 seconds.

6. A process according to any one of claims 1 to 3, characterized in that the cooling system through which the reactor contents flow consists in that cold dispersion medium or another cold, inert substance is metered into the dispersion exit stream.

7. A process according to any one of the preceding claims, characterized in that the cooling system through which the reactor contents flow is followed by a preferably heat-insulated length of piping.

8. A process according to claim 7, characterized in that the residence time of the dispersion in the downstream length of piping is from 1 to 100 seconds, preferably from 5 to 20 seconds.

9. A process according to any one of the preceding claims, characterized in that the polyolefin particles comprise an ethylene-propylene random copolymer containing from 1 to 15% by weight of ethylene.

## Revendications

1. Procédé de fabrication de particules en mousse de polyoléfines à l'aide d'une formation de mousse en dispersion,
caractérisé en ce que
le contenu du réacteur qui consiste pour l'essentiel en des particules de polyoléfines, en un agent de dispersion liquide et le cas échéant en un agent propulseur volatil, est traité en premier lieu à une première température qui se situe au dessus du point de fusion des cristallites Tₘ de la polyoléfine et ensuite est conduit à travers un dispositif de refroidissement dans lequel la dispersion est amenée à une deuxième température plus basse qui se situe au dessus du point de ramollissement de la polyoléfine, après quoi les particules de polymère sont ensuite à cette température, transformées en mousse.

2. Procédé selon la revendication 1,
caractérisé en ce que
la première température se situe dans la plage comprise entre Tₘ + 1°C et Tₘ + 20°C.

3. Procédé selon l'une des revendications précédentes,
caractérisé en ce que
la deuxième température, plus basse, se situe à 5 à 25°C en dessous de la première température.

4. Procédé selon l'une des revendications précédentes,
caractérisé en ce que
le dispositif de refroidissement parcouru par le contenu du réacteur est un échangeur de chaleur.

5. Procédé selon la revendication 4,
caractérisé en ce que
le temps de contact de la dispersion dans l'échangeur de chaleur s'élève à 1 à 100 secondes et de préférence à 5 à 20 secondes.

6. Procédé selon l'une des revendications 1 à 3,
caractérisé en ce que
le dispositif de refroidissement parcouru par le contenu du réacteur consiste dans le fait qu'un agent de dispersion froid où une autre substance inerte froide est admise par doses dans la dispersion qui s'écoule.

7. Procédé selon l'une des revendications précédentes,
caractérisé en ce que
le dispositif de refroidissement parcouru par le contenu du réacteur est intercalé à l'arrière d'un segment de tube, de préférence isolé de la chaleur.

8. Procédé selon la revendications 7,
caractérisé en ce que
le temps de contact de la dispersion dans le segment de tube intercalé en arrière s'élève à 1 à 100 secondes et de préférence à 5 à 20 secondes.

9. Procédé selon l'une des revendications précédentes,
caractérisé en ce que
les particules de polyoléfine sont formées d'un copolymère sélectionné au hasard éthylène/propylène ayant de 1 à 15 % en poids d'éthylène.
